# EUROPÄISCHE PATENTANMELDUNG

(11) **EP 3 315 996 A1**
(43) Veröffentlichungstag der Anmeldung: **02.05.2018**
(21) Anmeldenummer: 17194118.0
(22) Anmeldetag: 29.09.2017
(51) Int. Cl.: G01S 17/42, G01S 7/481, G02B 6/36, H04B 10/80

(54) **OPTOELEKTRONISCHER SENSOR UND VERFAHREN ZUR ERFASSUNG VON OBJEKTEN IN EINEM ÜBERWACHUNGSBEREICH**

(30) Priorität: 26.10.2016 DE 102016120389
(71) Anmelder: Sick AG, 79183 Waldkirch (DE)
(72) Erfinder: Gimpel, Hartmut, 79194 Gundelfingen (DE); Jägel, Matthias, 79104 Freiburg (DE)

(57) **Zusammenfassung**

Es wird ein optoelektronischer Sensor (10) zur Erfassung von Objekten in einem Überwachungsbereich (20) mit einem Lichtsender (28) zum Aussenden eines Sendelichtstrahls (32), einem Lichtempfänger (38) zum Erzeugen eines Empfangssignals aus dem remittierten Licht (34), einer gegenüber einer Sockeleinheit (14) beweglichen Abtasteinheit (12) zur periodischen Abtastung des Überwachungsbereichs (20), einer Auswertungseinheit (40, 48) zur Erfassung von Informationen über Objekte in dem Überwachungsbereich (20) sowie einer optischen Datenschnittstelle (42, 44, 46) angegeben, wobei eine optische Datenübertragungseinheit (42, 44) an einer Koppelstelle (54) des Lichtleiters (46) angeordnet ist. Eine andere optische Datenübertragungseinheit (44, 42) ist so angeordnet, dass sie den Lichtleiter (46) im Verlauf der periodischen Bewegung der Abtasteinheit (12) über zumindest einen Teil seiner Längserstreckung überstreicht, und der Lichtleiter (46) ist für eine Koppelung von Licht über seine Längserstreckung ausgebildet.

## Beschreibung

Die Erfindung betrifft einen optoelektronischen Sensor, insbesondere einen Laserscanner sowie ein Verfahren zur Erfassung von Objekten in einem Überwachungsbereich nach dem Oberbegriff von Anspruch 1 beziehungsweise 13.

Optoelektronische Systeme und besonders Laserscanner eignen sich für Abstandsmessungen über einen großen horizontalen Winkelbereich. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Antastungen desselben Objekts an verschieden Stellen dessen Kontur bestimmen. Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Drehspiegel oder ein Polygonspiegelrad trifft. Lichtsender, Lichtempfänger sowie zugehörige Elektronik und in der Regel auch die Optik sind im Gerät fest montiert und vollziehen die Drehbewegung nicht mit. Durch den Spiegel ergeben sich sehr hohe Anforderungen an die Ausrichtung der Lichtsender und Lichtempfänger zur Drehachse. Abweichungen davon führen zu einer verbogenen Überwachungsebene. Außerdem sind solche Optikeinheiten baugroß, weil sich immer ein Teil der Objektweite über den Spiegel bis zur Empfangsoptik in das Gerät erstreckt.

Es ist auch bekannt, den Drehspiegel durch eine mitbewegte Abtasteinheit zu ersetzen. Beispielsweise rotiert in der DE 197 57 849 B4 der gesamte Messkopf mit Lichtsender und Lichtempfänger. Ein derartiges drehendes Modul kann den Sendelaser samt seiner elektronischen Ansteuerung, die Sendeoptik, die Empfangsoptik, den Lichtempfänger samt seiner elektronischen Ausleseelektronik und gegebenenfalls auch noch Analog- und Digitalelektronik enthalten, um die elektronischen Rohsignale auszuwerten. Die DE 10 2013 111 547 A1 schlägt vor, mehrere Sender-/Empfänger-module in einer drehenden Abtasteinheit unterzubringen, die auch für unterschiedliche Messprinzipien ausgebildet sein können.

Bei solchen Konzepten mit drehendem Messmodul muss für eine Energie- und Datenübertragung zwischen dem ruhenden und bewegten Geräteteil gesorgt werden. In der EP 2 388 619 A1 wird die rotierende Abtasteinheit nach dem Transformationsprinzip von den drehfesten Bereichen des Sensors mit Energie versorgt, während die Datenübertragung drahtlos per Funk oder auf optischem Wege erfolgt. Näher ausgeführt sind diese drahtlosen Schnittstellen dann aber nicht. Eine Funkübertragung, etwa ähnlich zu der WLAN-Technologie, ist störanfällig gegen elektromagnetische Felder aus der Umgebung des Geräts, und außerdem entsteht störender Funk in die Umgebung.

Die US 7 187 823 B2 beschreibt ein System zur Übertragung von Leistung und einem optischen Signal zwischen Komponenten eines Überwachungsgeräts. Dabei rotieren zwei Ringkerne zueinander, die als Transformator zur berührungslosen Energieversorgung arbeiten, während die optische Übertragung über einen Lichtleiter durch deren Zentrum erfolgt. Dieses System erfordert einen besonderen Antrieb mit Hohlwelle.

In der DE 10 2014 107 353 A1 ist für die Datenübertragung ein Lichtleiter vorgesehen, der dezentral an der Haube beziehungsweise Frontscheibe verläuft. Die Kopplung erfolgt dabei zentral nach oben. In einer Ausführungsform dient die Haube selbst als Lichtleiter.

Weiterhin bekannt ist ein berührungsloser Datenaustausch über induktive oder kapazitive Kopplung. Dabei werden vergleichsweise großflächige Elektronikkomponenten wie Spulen oder Kondensatoren benötigt, und es sind Störungen durch äußere Wechselfelder denkbar. Außerdem ist die erzielbare Datenrate begrenzt.

Es ist daher Aufgabe der Erfindung, die Datenübertragung zwischen ruhendem und bewegtem Geräteteil eines gattungsgemäßen Sensors zu verbessern.

Diese Aufgabe wird durch einen optoelektronischen Sensor sowie ein Verfahren zur Erfassung von Objekten in einem Überwachungsbereich nach Anspruch 1 beziehungsweise 13 gelöst. Der Sensor weist eine Abtasteinheit auf, die gegenüber einer Sockeleinheit periodisch bewegt wird, um den Überwachungsbereich abzutasten. Über eine optische Datenschnittstelle werden Daten zwischen Abtasteinheit und Sockeleinheit ausgetauscht. Dabei befindet sich eine erste Datenübertragungseinheit in der Abtasteinheit und eine zweite Datenübertragungseinheit in der Sockeleinheit, und ein Lichtleiter überträgt die Daten. Vorzugsweise bewegt sich die erste Datenübertragungseinheit mit der Abtasteinheit und die zweite Datenübertragungseinheit ruht in der Sockeleinheit. Zusätzliche Bewegungen mindestens einer der Datenübertragungseinheiten, so dass diese sich weder relativ zu der Abtasteinheit noch zu der Sockeleinheit in Ruhe befindet, sind aber nicht grundsätzlich ausgeschlossen.

Die Erfindung geht nun von dem Grundgedanken aus, den Lichtleiter so zu gestalten, dass für eine Kopplung mit den Datenübertragungseinheiten keine feste Relativposition notwendig ist. Der Lichtleiter ist für eine Kopplung von Licht über seine Längserstreckung ausgebildet. Mindestens eine Datenübertragungseinheit überstreicht im Verlauf der periodischen Bewegung der Abtasteinheit den Lichtleiter und koppelt an verschiedenen Stellen. Je nach Kommunikationsrichtung zwischen Sockeleinheit und Abtasteinheit soll Licht in den Lichtleiter eingekoppelt oder aus dem Lichtleiter ausgekoppelt werden. Die dafür erforderlichen Lichtleitereigenschaften können dieselben sein, also Kopplung über die Längserstreckung, oder es gibt auf einer Seite eine feste Koppelstelle.

Es genügt im Prinzip, wenn an mehreren Positionen des Lichtleiters Licht aus- oder eingekoppelt werden kann, vorzugsweise ist dies aber über die gesamte von der mindestens einen optischen Datenübertragungseinheit überstrichene Längserstreckung oder sogar den gesamten Lichtleiter möglich, damit dieser einfach und homogen hergestellt werden kann. Dabei muss die mindestens eine Datenübertragungseinheit nicht unbedingt die gesamte Längserstreckung überstreichen.

Die Erfindung hat den Vorteil, dass auf einfache Weise die Übertragung von Daten zwischen einem bewegten und einem ruhenden System ermöglicht wird. Da der Lichtleiter für die Kommunikation mit der mindestens einen Datenübertragungseinheit keiner festen Koppelposition bedarf, ist eine außer-axiale optische Datenübertragung möglich und keine Hohlwelle erforderlich, beziehungsweise dies kann für andere Zwecke wie eine Energieübertragung genutzt werden. Die optische Datenschnittstelle kann im Vergleich zu elektronischer Datenübertragung hohe Datenraten erreichen, beispielsweise mit einer LED etwa 100 Mbit/s, mit einem Laser auch 10 Gbit/s und mehr. Der optische Kommunikationskanal lässt sich auch deutlich besser gegen Störeinflüsse abschirmen als ein elektronischer Hochfrequenz-Kommunikationskanal, deshalb sind auch höhere Netto-Datenraten zu erwarten. Da pro Übertragungsweg nur ein einziger Datenlichtsender und Datenlichtempfänger notwendig ist und ein Lichtleiter mit den geforderten Eigenschaften sehr einfach hergestellt werden kann, ist die erfindungsgemäße Datenschnittstelle auch eine kostengünstige Lösung.

Der Lichtleiter weist bevorzugt eine Koppelstelle auf, an dem eine der Datenübertragungseinheiten relativ zu dem Lichtleiter ruhend angeordnet ist. Da der Lichtleiter über seine gesamte Längserstreckung für eine Kopplung von Licht ausgebildet ist, können die Datenübertragungseinheiten praktisch beliebig zu dem Lichtleiter angeordnet sein und sich relativ dazu in unterschiedlichen Geschwindigkeiten bewegen oder ruhen. Eine besondere Koppelstelle zum Ein- oder Auskoppeln von Licht ist nicht zwingend erforderlich. Vorzugsweise wird sich aber eine der Datenübertragungseinheiten relativ zu dem Lichtleiter in Ruhe befinden. Dann kann die Anordnung an einer dedizierten Koppelstelle erfolgen, und diese Kopplung ist deutlich effizienter.

Der Lichtleiter ist bevorzugt in der Sockeleinheit angeordnet, so dass die zweite optische Datenübertragungseinheit relativ zu dem Lichtleiter ruht, insbesondere an der Koppelstelle angeordnet ist, und die erste Datenübertragungseinheit den Lichtleiter im Verlauf der periodischen Bewegung überstreicht, oder der Lichtleiter ist in der Abtasteinheit angeordnet, so dass die erste optische Datenübertragungseinheit relativ zu dem Lichtleiter ruht, insbesondere an der Koppelstelle angeordnet ist und die zweite Datenübertragungseinheit den Lichtleiter im Verlauf der periodischen Bewegung überstreicht. Je nach Ausführungsform vollzieht also der Lichtleiter die periodische Bewegung der Abtasteinheit mit oder nicht. Dementsprechend befindet sich entweder die erste Datenübertragungseinheit oder die zweite Datenübertragungseinheit relativ zu dem Lichtleiter in Ruhe und kann an der definierten Koppelstelle angeordnet werden. Die jeweilige andere Datenübertragungseinheit, also die zweite Datenübertragungseinheit beziehungsweise die erste Datenübertragungseinheit, nimmt dann die andere Rolle ein, welche den Lichtleiter im Verlauf der periodischen Bewegung überstreicht.

Die erste Datenübertragungseinheit weist bevorzugt einen Datenlichtsender und die zweite Datenübertragungseinheit einen Datenlichtempfänger auf oder umgekehrt. Demnach sind beide Varianten der Kommunikationsrichtung von der Abtasteinheit zur Sockeleinheit oder umgekehrt denkbar.

Bevorzugt weisen die erste Datenübertragungseinheit und die zweite Datenübertragungseinheit jeweils einen Datenlichtsender und einen Datenlichtempfänger auf. Dann sind beide Übertragungsrichtungen und somit eine bidirektionale Kommunikation möglich. Noch bevorzugter arbeiten die jeweiligen Paare aus Datenlichtsender und Datenlichtempfänger mit unterschiedlichen Wellenlängen, beziehungsweise sind die erste Datenübertragungseinheit und die zweite Datenübertragungseinheit für ein Wellenlängenmultiplexing ausgebildet. So können Daten auch gleichzeitig in beide Richtungen übertragen werden, ohne sich gegenseitig zu stören, und es wird eine bidirektionale Kommunikation mit Vollduplex möglich.

Der Lichtleiter ist bevorzugt als Lichtleiterring ausgebildet. Dabei ist die Längserstreckung vorzugsweise die Umfangsrichtung. Besonders bevorzugt ist der Lichtleiterring in einer Ebene senkrecht zu einer Achse angeordnet, um die sich die Abtasteinheit gegenüber der Sockeleinheit bewegt, insbesondere mit der Achse durch die Mitte des Lichtleiterrings. Weiter bildet der Lichtleiterring bevorzugt einen Kreisring. Ohne Neigung, Exzentrizität oder elliptische Form ist die Relativposition und damit Abstand und Blickwinkel der relativ zu dem Lichtleiter bewegten Datenübertragungseinheit in allen Phasen der Bewegung vergleichbar. Dadurch wird eine stabile Datenübertragung erleichtert.

Die Koppelstelle weist bevorzugt einen tangential von dem Lichtleiterring weitergeführten Lichtleiterstummel auf. Das ermöglicht eine zuverlässige Kopplung und eine geeignete Position der relativ zu dem Lichtleiter ruhenden Datenübertragungseinheit. Dennoch handelt es sich nur um eine von zahlreichen denkbaren Ausgestaltungsmöglichkeiten der Koppelstelle.

Der Lichtleiter weist bevorzugt fluoreszierendes Material auf. Noch bevorzugter besteht der Lichtleiter insgesamt aus fluoreszierendem Material. Das Fluoreszenzverhalten sorgt dafür, dass ein relativ zu dem Lichtleiter bewegter Datenlichtsender an praktisch beliebiger Stelle Licht in den Lichtleiter einkoppeln kann. Bei umgekehrter Datenrichtung bewirkt die Fluoreszenz ein Leuchten und damit Auskoppeln über den Lichtleiter hinweg. Die Wellenlänge der optischen Kommunikation und das fluoreszierende Material sind bevorzugt aufeinander abgestimmt, um einen ausreichenden Fluoreszenzeffekt zu erreichen.

Der Lichtleiter ist bevorzugt als gefärbtes Spritzteil oder durch Fräsen aus einer gefärbten Kunststoffscheibe hergestellt. Dabei ist die Farbe bevorzugt fluoreszierend. Der Lichtleiter kann auf diese Weise besonders einfach und kostengünstig hergestellt werden. Alternativ kommt jegliches transparente Material wie Glas mit entsprechender Färbung in Betracht.

Der Lichtleiter weist bevorzugt ein Lichtleitermaterial mit Volumenstreuung auf. Die Volumenstreuung kann beispielsweise durch entsprechende Partikel im Lichtleitermaterial erreicht werden. So wird Licht in den Lichtleiter hinein beziehungsweise bei umgekehrter Kommunikationsrichtung aus dem Lichtleiter heraus gestreut.

Der Lichtleiter weist bevorzugt eine raue Oberfläche auf. Eine raue Oberfläche schafft kleine, über den Lichtleiter verteilte Koppelstellen. Vorzugsweise wird der Lichtleiter nur auf der Seite aufgeraut, die zu der überstreichenden Datenübertragungseinheit hin gerichtet ist, also insbesondere auf der Oberseite oder Unterseite.

Der Lichtsender und/oder der Lichtempfänger ist vorzugsweise in der Abtasteinheit angeordnet. Die Abtasteinheit bildet dann einen drehenden Messkopf. Die optische Datenübertragung dient insbesondere dazu, den Lichtsender anzusteuern, etwa mit Sendemustern, und/oder das Empfangssignal auszulesen. In der Abtasteinheit können auch Messsignale vorverarbeitet werden, und prinzipiell sind auch weitere Aufgaben bis hin zu der gesamten Datenverarbeitung in der Abtasteinheit denkbar.

Die Abtasteinheit weist bevorzugt mehrere Sender-Empfänger-Module mit jeweils einem Lichtsender und einem Lichtempfänger auf. Dadurch wird in einer Periode der Bewegung mehr Information erfasst. Die mitbewegten Module können auf unterschiedlichen Messprinzipien beruhen, wie Bilderfassung, binärer Objekterfassung oder Abstandsmessung, oder in Aufbau oder Konfiguration variieren. Nicht-optische Messungen ohne Lichtsender und Lichtempfänger wie Radar sind auch denkbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung durch einen Laserscanner; und
- Fig. 2: eine schematische dreidimensionale Darstellung eines Lichtleiterrings zur optischen Datenübertragung in einem Laserscanner.

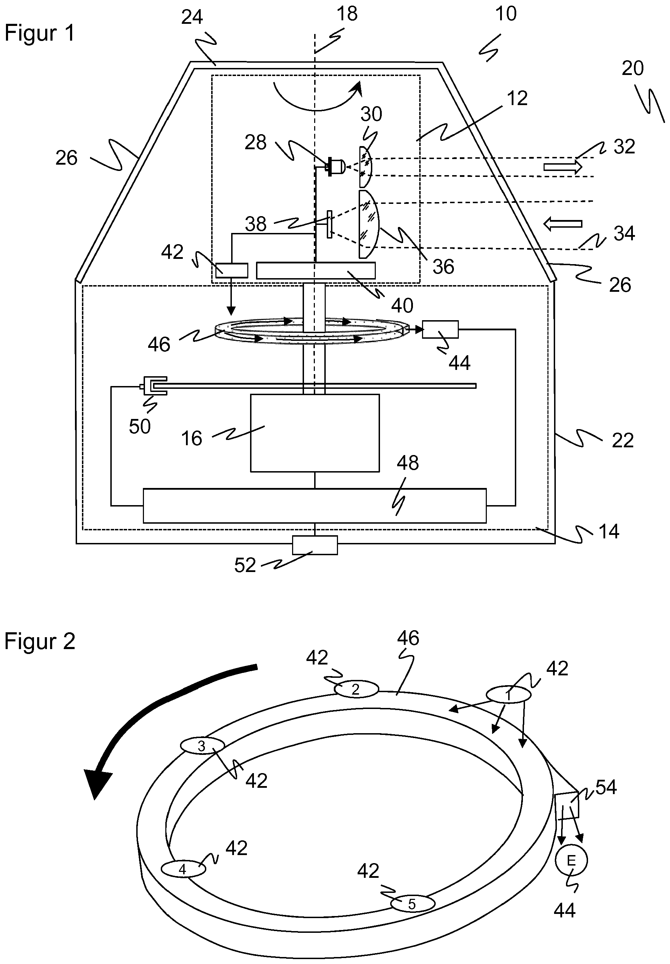

Fig. 1 zeigt eine schematische Schnittdarstellung durch einen optoelektronischen Sensor in einer Ausführungsform als Laserscanner 10. Der Laserscanner 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten. Prinzipiell ist auch eine schwenkende Hin- und Herbewegung denkbar. Der Laserscanner 10 ist in einem Gehäuse 22 untergebracht, welches nach oben hin durch eine Haube 24 mit einer um die Drehachse 18 umlaufenden Frontscheibe 26 abgeschlossen ist. Gehäuse 22 und Haube 24 könnten anders als dargestellt auch als Teil der Sockeleinheit 14 aufgefasst werden, da sie wie die Sockeleinheit 14 ruhen.

In der Abtasteinheit 12 erzeugt ein Lichtsender 28 mit Hilfe einer Sendeoptik 30 einen Sendelichtstrahl 32, der in den Überwachungsbereich 20 ausgesandt wird. Trifft der Sendelichtstrahl 32 in dem Überwachungsbereich 20 auf ein Objekt, so kehrt ein entsprechender Lichtstrahl als remittiertes Licht 34 zu dem Laserscanner 10 zurück. Das remittierte Licht 34 wird von einer Empfangsoptik 36 auf einen Lichtempfänger 38 geführt und dort in ein elektrisches Empfangssignal gewandelt. Das Empfangssignal wird an eine Vorverarbeitungseinheit 40 übergeben und dort beispielsweise verstärkt, gefiltert, digitalisiert und dergleichen. Die Vorverarbeitungseinheit 40 kann auch andere Funktionen wie die Ansteuerung des Lichtsenders 28 übernehmen oder in anderen Ausführungsformen nicht vorhanden sein.

Die Anordnung innerhalb der Abtasteinheit 12 ist ohnehin rein beispielhaft zu verstehen. So wäre alternativ jede andere an sich von einstrahligen optoelektronischen Sensoren oder Laserscannern bekannte Anordnung wie etwa eine Doppellinse mit Sendeoptik im Zentrum einer Empfangslinse oder die Verwendung eines Strahlteilerspiegels möglich. Auch können in der Abtasteinheit 12 mehrere Sender-/Empfängermodule übereinander und/oder mit Winkelversatz vorhanden sein, die gleichartige oder verschiedene optische Messungen, wie Objekterfassung, Abstandsmessung oder Bilderfassung, oder auch nicht optische Messungen wie Radar leisten. Für solche Ausgestaltungsmöglichkeiten wird ergänzend auf die einleitend zitierte DE 10 2013 111 547 A1 verwiesen.

Zwischen bewegter Abtasteinheit 12 und ruhender Sockeleinheit 14 ist eine optische Datenschnittstelle vorgesehen, die eine erste optische Datenübertragungseinheit 42 der Abtasteinheit 12, eine zweite optische Datenübertragungseinheit 44 der Sockeleinheit 14 und einen beispielsweise ringförmig gestalteten Lichtleiter 46 aufweist. Durch Pfeile ist eine beispielhafte Kommunikationsrichtung von der ersten Datenübertragungseinheit 42 über den Lichtleiter 46 zu der zweiten Datenübertragungseinheit 44 dargestellt. Funktionsweise und Varianten der gezeigten optischen Datenschnittstelle werden weiter unten anhand der Figur 2 näher erläutert. Über die optische Datenschnittstelle stehen die Vorverarbeitungseinheit 40 oder, falls diese nicht vorhanden ist, unmittelbar Lichtsender 28 und/oder Lichtempfänger 38 mit einer Auswertungseinheit 48 der Sockeleinheit 14 in Verbindung. Dabei kann die Steuer- und Auswertungsfunktionalität weitgehend frei zwischen Vorverarbeitungseinheit 40 und Auswertungseinheit 48 verteilt sein, wird aber so beschrieben, als sei maßgeblich die Auswertungseinheit 48 dafür zuständig.

Die Auswertungseinheit 48 wertet das Empfangssignal aus, steuert den Antrieb 16 und erhält das Signal einer Winkelmesseinheit 50, welche die jeweilige Winkelstellung der Abtasteinheit 12 bestimmt. Zur Auswertung wird vorzugsweise mit einem Lichtlaufzeitverfahren die Distanz zu einem angetasteten Objekt gemessen. Dazu wird in einem phasenbasierten System das Sendelicht des Lichtsenders 28 moduliert und eine Phasenbeziehung zu dem Empfangssignal des Lichtempfängers 38 ausgewertet. Alternativ werden in einem pulsbasierten System kurze Lichtpulse zu einem Sendezeitpunkt als Sendelicht ausgesandt und aus dem Empfangssignal deren Empfangszeitpunkt ermittelt. Dabei sind sowohl Einzelpulsverfahren, die jeweils aus einem einzigen Sendepuls eine Entfernung bestimmen, als auch Pulsmittelungsverfahren denkbar, in denen das Empfangssignal nach einer Vielzahl aufeinanderfolgender Sendepulse gesammelt und statistisch ausgewertet wird. Die jeweilige Winkelstellung, unter welcher der Sendelichtstrahl 32 jeweils ausgesandt wurde, ist von der Winkelmesseinheit 50 ebenfalls bekannt. Somit stehen nach jeder Scanperiode, insbesondere Umdrehung der Abtasteinheit 12, über den Winkel und die Entfernung zweidimensionale Polarkoordinaten aller Objektpunkte in einer Abtastebene zur Verfügung.

Damit sind die Objektpositionen beziehungsweise Objektkonturen bekannt und können über eine Sensorschnittstelle 52 ausgegeben werden. Die Sensorschnittstelle 52 oder ein weiterer, nicht gezeigter Anschluss dienen umgekehrt als Parametrierschnittstelle. Bei Anwendungen in der Sicherheitstechnik werden Schutzfelder, die in dem Überwachungsbereich 20 konfiguriert werden können, auf unzulässige Eingriffe überwacht, und daraufhin wird gegebenenfalls ein sicherheitsgerichtetes Abschaltsignal über die dann sicher ausgebildete Schnittstelle 52 (z.B. OSSD, Output Signal Switching Device) ausgegeben.

Der Lichtsender 28 kann als einfache Lichtquelle, etwa in Form einer Halbleiterdiode, aber auch als beispielsweise zeilen- oder matrixförmige Anordnung zahlreicher Lichtquellen aufgebaut sein. Entsprechend kann es sich bei dem Lichtempfänger 38 um eine einfache Empfangsfläche, etwa einer Photodiode, oder um eine beispielsweise zeilen- oder matrixförmige Anordnung von Lichtempfangselementen handeln, wie einen CCD- oder CMOS-Chip. Damit entsteht dann nicht nur ein einzelner Abtaststrahl, sondern eine entsprechende Vielzahl zur Aufnahme von zweidimensionalen Bilddaten oder dreidimensionalen Bilddaten mit Hilfe eines Lichtlaufzeitverfahrens. Prinzipiell können nahezu beliebige Sensoreinheiten in der Abtasteinheit 12 rotieren und so den Überwachungsbereich 20 erfassen. Es besteht auch die Möglichkeit, die Abtasteinheit 12 zusätzlich zu verkippen oder mehrere übereinander angeordnete Lichtsender 28 beziehungsweise Lichtempfänger 38 oder eine insbesondere entfernungsmessende Kamerazeile rotieren zu lassen, um einen dreidimensionalen Raumbereich abzutasten.

Figur 2 zeigt eine schematische dreidimensionale Darstellung der optischen Datenschnittstelle mit einem als Ring ausgebildeten Lichtleiter 46. Wie in Figur 1 zu erkennen, ruht der Lichtleiter 46 in dieser Ausführungsform mit der Sockeleinheit 14. Der Ring ist so angeordnet, dass die Drehachse 18 durch seinen Mittelpunkt verläuft. Der Lichtleiter 46 ist mit einem Fluoreszenzfarbstoff eingefärbt. Die Wellenlänge des für die optische Datenübertragung genutzten Lichts ist so gewählt, dass das Licht gut von dem Fluoreszenzfarbstoff absorbiert wird und Fluoreszenz anregt. Diese Wellenlänge unterscheidet sich vorzugsweise zugleich von derjenigen des Lichtsenders 28, um eine gegenseitige Beeinflussung durch Streulicht wirkungsvoll zu unterdrücken, wobei zusätzlich entsprechende bandbegrenzende optische Filter vorgesehen sein können.

Die in dieser Ausführungsform als Datenlichtsender, beispielsweise LED oder Laser, ausgestaltete erste Datenübertragungseinheit 42 bewegt sich mit der Abtasteinheit 12. Dabei wird während der Bewegung der Abtasteinheit 12 der Lichtleiter 46 in seiner Längserstreckung, hier in Umfangsrichtung, überstrichen und dementsprechend aus verschiedenen Positionen angeleuchtet. Figur 2 zeigt beispielhaft fünf durchnummerierte, nacheinander eingenommene Positionen. Während der Bewegung kann der Datenlichtsender codierte Lichtsignale aussenden und damit den Lichtleiter 46 beleuchten. Dieses Licht wird von dem Fluoreszenzfarbstoff in dem Lichtleiter 46 absorbiert und danach als Fluoreszenzlicht wieder emittiert. Dieser Fluoreszenzvorgang streut das Licht gleichmäßig in alle Raumrichtungen. Ein großer Anteil bleibt durch Totalreflexion im Lichtleiter 46 gefangen und wird, wie durch einen großen Pfeil angedeutet, im Lichtleiter 46 geleitet. Ohne den Fluoreszenzvorgang dagegen würde fast alles Licht den Lichtleiter 46 einfach wieder auf der gegenüberliegenden Seite verlassen, da aus der Einstrahlrichtung die Winkelbedingung für Totalreflexion nicht erfüllt ist.

An einer Stelle weist der Lichtleiter 46 eine Koppelstelle 54 auf. Dort ist die Formgebung gezielt so, dass keine Totalreflexion mehr stattfindet, sondern das dorthin geleitete Licht gut ausgekoppelt und abgestrahlt wird. In Figur 2 ist dafür ein tangential an dem Ring angeordneter Lichtleiterstummel beziehungsweise eine Koppelrampe vorgesehen. Die Geometrie oder prinzipielle Vorgehensweise, um an einer einzelnen Stelle eine Koppelstelle 54 zu schaffen, kann sich stark von der exemplarisch gezeigten Koppelrampe unterscheiden.

Die in dieser Ausführungsform als Datenlichtempfänger ausgebildete zweite Datenübertragungseinheit 44 ist an der Koppelstelle 54 angeordnet und empfängt so die codierten Lichtsignale aus dem Lichtleiter 46. Wie der Lichtleiter 46 ruht auch die zweite Datenübertragungseinheit 44 mit der Sockeleinheit 14, so dass sich die Anordnung zwischen der Koppelstelle und der zweiten Datenübertragungseinheit 44 durch die Bewegung der Abtasteinheit 12 nicht verändert.

Die in Figur 2 dargestellte Ausführungsform erläutert den Erfindungsgedanken, soll aber nicht einschränkend verstanden werden. Es sind viele Variationen denkbar. Zwar ist häufig die wichtigere Kommunikationsrichtung von der Abtasteinheit 12 zur Sockeleinheit 14 wie dargestellt, da ohne das Empfangssignal oder eine aus dem Empfangssignal gewonnene Information keine Messinformation ausgegeben werden kann. Die andere Kommunikationsrichtung ist aber auch möglich.

Dazu gibt es zwei Möglichkeiten. Einmal kann der Lichtleiter 46, statt in der Sockeleinheit 14 zu ruhen, auch mit der Abtasteinheit 12 bewegt werden. Dann kann die erste Datenübertragungseinheit 42 als Datenlichtempfänger ausgebildet sein und an der Koppelstelle 54 angeordnet werden, da beides mitbewegt ist und folglich relativ zueinander ruht. Die zugehörige als Datenlichtsender ausgebildete zweite Datenübertragungseinheit 44 ruht in der Sockeleinheit 14, bewegt sich aber relativ zu dem in der Abtasteinheit 12 bewegten Lichtleiter 46, so dass sich im Grunde dasselbe Funktionsprinzip ergibt wie in Figur 2.

Es kann aber auch der Lichtweg umgekehrt werden. Hierzu wird das Licht an der Koppelstelle 54 von einem Datenlichtsender eingekoppelt. Das durch Totalreflexion im Lichtleiter 46 geführte Licht wird dann entlang des gesamten Umfangs durch den Fluoreszenzfarbstoff zunächst absorbiert und dann wieder abgestrahlt. Der Lichtleiter 46 leuchtet folglich überall entsprechend der Codierung des eingekoppelten Lichts. Daher kann ein bezüglich des Lichtleiters 46 bewegter Datenlichtempfänger in jeder Phase der Bewegung Licht von dem Lichtleiter 46 empfangen. Diese Art der Übertragung ist möglicherweise weniger effizient, aber für einen Laserscanner 10 ausreichend. Der umgekehrte Lichtweg ist sowohl für einen in der Sockeleinheit 14 ruhenden als auch einen mit der Abtasteinheit 12 mitbewegten Lichtleiter 46 möglich.

Es gibt somit zumindest vier Varianten der Datenschnittstelle. Figur 1 zeigt einen bewegten Datenlichtsender, der einen ruhenden Lichtleiter 46 über dessen Längserstreckung beleuchtet, wobei an der Koppelstelle 54 ein ruhender Datenlichtempfänger sitzt. Es kann zweitens umgekehrt ein Datenlichtsender ruhen und einen bewegten Lichtleiter 46 über dessen Längserstreckung beleuchten, an dessen Koppelstelle 54 ein mitbewegter Datenlichtempfänger sitzt. Drittens kann ein ruhender Datenlichtsender an der Koppelstelle 54 eines ruhenden Lichtleiters 46 angeordnet sein, der daraufhin Licht über seine Längserstreckung abstrahlt, das von einem bewegten Datenlichtempfänger empfangen wird. Schließlich kann viertens umgekehrt ein bewegter Datenlichtsender an der Koppelstelle 54 eines mitbewegten Lichtleiters 46 vorgesehen sein, woraufhin der Lichtleiter 46 über seine Längserstreckung leuchtet und deshalb ein ruhender Datenlichtempfänger das Licht während der gesamten Bewegung empfangen kann.

Im Prinzip ist es nicht einmal erforderlich, dass eine der Datenübertragungseinheiten 42, 44 relativ zu dem Lichtleiter 46 ruht. Es können sich auch, wenn man die Effizienzverluste in Kauf nimmt, der jeweilige Datenlichtsender und Datenlichtempfänger einer Kommunikationsverbindung relativ zu dem Lichtleiter 46 bewegen, da dieser über seinen Umfang beziehungsweise seine Längserstreckung überall Licht ein- und auskoppelt. Anschaulich ausgedrückt wird der Lichtleiter 46 in Relativbewegung durch den Datenlichtsender zum Leuchten gebracht, und dieses Leuchten wird von dem Datenlichtempfänger ebenfalls in Relativbewegung zu dem Lichtleiter 46 registriert und ausgewertet. Eine feste Koppelstelle 54 gibt es dann nicht, und der Lichtleiter 46 kann als symmetrischer Ring ausgebildet sein.

Eine derartige doppelte Bewegung gegenüber dem Lichtleiter 46 ist in einem üblichen 2D-Laserscanner, in dem die einzige Bewegung diejenige der Abtasteinheit 12 gegenüber der Sockeleinheit 14 ist, vermutlich eher ungewöhnlich, weil sich typischerweise die Datenübertragungseinheiten 42, 44 und der Lichtleiter 46 entweder relativ zu der Abtasteinheit 12 oder der Sockeleinheit 14 in Ruhe befinden. Beispielsweise für einen 3D-Laserscanner kann das aber sinnvoll sein, in dem auch innerhalb der Abtasteinheit 12 dagegen bewegliche Komponenten vorgesehen sind, mit denen kommuniziert werden soll, wobei sich eine Datenübertragungseinheit 42, 44 mit diesen Komponenten bewegt und der Lichtleiter 46 beispielsweise relativ zu der Abtasteinheit 12 ruht.

Außerdem ist die Variante mit einem Lichtleiter 46 ohne Koppelstelle 54 auch ohne die geschilderte Doppelbewegung denkbar. Dabei geht Koppeleffizienz verloren, dafür besteht Wahlfreiheit, an welcher Stelle sich die bezüglich des Lichtleiters 46 ruhende Datenübertragungseinheit 42, 44 befindet.

Weiterhin ist denkbar, dass die Datenübertragungseinheiten 42, 44 jeweils für Senden und Empfangen ausgebildet sind, beispielsweise als jeweils ein Paar nebeneinander angeordneter Datenlichtsender und Datenlichtempfänger. Damit ist dann eine bidirektionale Kommunikation möglich, die sowohl den Effekt nutzt, dass über die Längserstreckung des Lichtleiters 46 eingekoppeltes Licht an der Koppelstelle 54 empfangen werden kann, als auch umgekehrt, dass der Lichtleiter 46 durch an der Koppelstelle 54 eingestrahltes Licht über seine Längserstreckung zum Leuchten gebracht werden kann. Der Lichtleiter 46 kann dabei in verschiedenen Ausführungsformen in der Sockeleinheit 14 ruhen oder mit der Abtasteinheit 12 mitbewegt sein. Eine bidirektionale Kommunikation ist nützlich, um nicht nur Messdaten auszulesen, sondern beispielsweise auch den Lichtsender 28 anzusteuern oder sich mit der Vorverarbeitungseinheit 40 zu verbinden. Um eine bidirektionale Kommunikation zu ermöglichen, ist entweder ein Zeitmultiplexing mit Zeitfenstern für die eine und andere Datenrichtung oder ein Vollduplex-Datenlink beispielsweise durch Wellenlängenmultiplexing vorstellbar. Alternativ kann ein weiterer Datenkanal unabhängig von der optischen Datenschnittstelle geschaffen werden.

Der fluoreszierende Lichtleiter 46 kann sehr einfach als gefärbtes Spritzteil oder als Frästeil aus einer fluoreszierenden Kunststoffscheibe hergestellt werden. Ein Lichtleiter 46 aus Glas oder einem anderen transparenten Material ist aber auch möglich. Statt des Fluoreszenzfarbstoffs in dem Lichtleiter 46 kann zur Lichtkopplung auch ein Lichtleitermaterial mit Volumenstreuung verwendet werden, das beispielsweise viele kleine Partikel im Material aufweist. Ein einfacher eingefärbter Kunststoff ist aber in der Regel einfacher herzustellen und zu bearbeiten. Eine weitere Alternative zu einem Fluoreszenzfarbstoff ist eine am Lichtleiter ausgeführte Oberflächenrauigkeit, die vorzugsweise nur in der Richtung vorgesehen ist, in der über die Längserstreckung gekoppelt werden soll, also im Beispiel der Figur 1 die Oberseite. Eine derartige Rauigkeit kann aber weniger wirkungsvoll und schwerer zu kontrollieren sein als ein Farbstoff im Material. Es können auch mehrere der genannten Maßnahmen gleichzeitig genutzt werden, um einen geeigneten Lichtleiter 46 zu erhalten.

Prinzipiell ist eine außeraxiale optische Datenübertragung auch ohne einen Lichtleiter 46 möglich. Dazu werden mehrere Datenlichtsender oder Datenlichtempfänger ringförmig angeordnet, so dass durch deren gleichzeitigen Betrieb über die Bewegung der Abtasteinheit 12 hinweg Lichtkontakt mit dem jeweiligen Gegenstück geschaffen wird und immer mindestens ein Datenlichtsender einen Datenlichtempfänger trifft. Der Lichtleiter 46 spart jedoch demgegenüber Datenlichtsender beziehungsweise Datenlichtempfänger ein.

## Patentansprüche

1. Optoelektronischer Sensor (10) zur Erfassung von Objekten in einem Überwachungsbereich (20), insbesondere Laserscanner, mit einem Lichtsender (28) zum Aussenden eines Sendelichtstrahls (32), einem Lichtempfänger (38) zum Erzeugen eines Empfangssignals aus dem von Objekten in dem Überwachungsbereich (20) remittierten Licht (34), einer Sockeleinheit (14), einer gegenüber der Sockeleinheit (14) beweglichen Abtasteinheit (12) zur periodischen Abtastung des Überwachungsbereichs (20) mit dem Sendelichtstrahl (32), einer Auswertungseinheit (40, 48) zur Erfassung von Informationen über Objekte in dem Überwachungsbereich (20) anhand des Empfangssignals sowie einer optischen Datenschnittstelle (42, 44, 46) mit einer ersten optischen Datenübertragungseinheit (42) der Abtasteinheit (12), einer zweiten optischen Datenübertragungseinheit (44) der Sockeleinheit (14) und einem Lichtleiter (46), um Daten zwischen der Sockeleinheit (14) und der Abtasteinheit (12) auszutauschen, **dadurch gekennzeichnet,**
**dass** mindestens eine der optischen Datenübertragungseinheiten (42, 44) so angeordnet ist, dass sie den Lichtleiter (46) im Verlauf der periodischen Bewegung der Abtasteinheit (12) über zumindest einen Teil seiner Längserstreckung überstreicht und dass der Lichtleiter (46) für eine Koppelung von Licht über seine Längserstreckung ausgebildet ist.

2. Sensor (10) nach Anspruch 1,
wobei der Lichtleiter (46) eine Koppelstelle (54) aufweist, an dem eine der Datenübertragungseinheiten (42, 44) relativ zu dem Lichtleiter (46) ruhend angeordnet ist.

3. Sensor (10) nach Anspruch 1,
wobei der Lichtleiter (46) in der Sockeleinheit (14) angeordnet ist, so dass die zweite optische Datenübertragungseinheit (44) relativ zu dem Lichtleiter (46) ruhend, insbesondere an einer Koppelstelle (54) der Lichtleiters (46), angeordnet ist und die erste Datenübertragungseinheit (42) den Lichtleiter (46) im Verlauf der periodischen Bewegung überstreicht, oder wobei der Lichtleiter (46) in der Abtasteinheit (12) angeordnet ist, so dass die erste optische Datenübertragungseinheit (42) relativ zu dem Lichtleiter (46) ruhend, insbesondere an einer Koppelstelle (54) des Lichtleiters (46), angeordnet ist und die zweite Datenübertragungseinheit (44) den Lichtleiter (46) im Verlauf der periodischen Bewegung überstreicht.

4. Sensor (10) nach einem der vorhergehenden Ansprüche,
wobei die erste Datenübertragungseinheit (42) einen Datenlichtsender aufweist und die zweite Datenübertragungseinheit (44) einen Datenlichtempfänger aufweist oder umgekehrt.

5. Sensor (10) nach einem der vorhergehenden Ansprüche,
wobei die erste Datenübertragungseinheit (42) und die zweite Datenübertragungseinheit (44) jeweils einen Datenlichtsender und einen Datenlichtempfänger aufweisen.

6. Sensor (10) nach einem der vorhergehenden Ansprüche,
wobei der Lichtleiter (46) als Lichtleiterring ausgebildet ist.

7. Sensor (10) nach Anspruch 6,
wobei die Koppelstelle (54) einen tangential von dem Lichtleiterring weitergeführten Lichtleiterstummel aufweist.

8. Sensor (10) nach einem der vorhergehenden Ansprüche,
wobei der Lichtleiter (46) fluoreszierendes Material aufweist.

9. Sensor (10) nach Anspruch 8,
wobei der Lichtleiter (46) als gefärbtes Spritzteil oder durch Fräsen aus einer gefärbten Kunststoffscheibe hergestellt ist.

10. Sensor (10) nach einem der vorhergehenden Ansprüche,
wobei der Lichtleiter (46) ein Lichtleitermaterial mit Volumenstreuung aufweist.

11. Sensor (10) nach einem der vorhergehenden Ansprüche,
wobei der Lichtleiter (46) eine raue Oberfläche aufweist.

12. Sensor (10) nach einem der vorhergehenden Ansprüche,
wobei die Abtasteinheit (12) mehrere Sender-Empfänger-Module mit jeweils einem Lichtsender (28) und einem Lichtempfänger (38) aufweist.

13. Verfahren zur Erfassung von Objekten in einem Überwachungsbereich (20), bei dem ein Sendelichtstrahl (32) ausgesandt und mit dem Sendelichtstrahl (32) über eine gegenüber einer Sockeleinheit (14) bewegliche Abtasteinheit (12) der Überwachungsbereich (20) periodisch abgetastet wird, aus dem von Objekten in dem Überwachungsbereich (20) remittierten Licht (34) ein Empfangssignal erzeugt und zur Erfassung von Informationen über Objekte in dem Überwachungsbereich (20) ausgewertet wird, wobei zwischen der Sockeleinheit (14) und der Abtasteinheit (12) über eine optische Datenschnittstelle (42, 44, 46) Daten ausgetauscht werden, die eine erste optische Datenübertragungseinheit (42) der Abtasteinheit (12), eine zweite optische Datenübertragungseinheit (44) der Sockeleinheit (14) und einen Lichtleiter (46) aufweist,
**dadurch gekennzeichnet,**
**dass** mindestens eine der optischen Datenübertragungseinheiten (42, 44) den Lichtleiter (46) im Verlauf der periodischen Bewegung der Abtasteinheit (12) über zumindest einen Teil seiner Längserstreckung überstreicht und zum Datenaustausch Licht in den Lichtleiter (46) über dessen Längserstreckung einkoppelt oder Licht von dem über seine Längserstreckung Licht auskoppelnden Lichtleiter (46) empfängt.
